# EUROPÄISCHE PATENTANMELDUNG

(11) **EP 0 875 438 A1**
(43) Veröffentlichungstag der Anmeldung: **04.11.1998**
(21) Anmeldenummer: 98107599.7
(22) Anmeldetag: 27.04.1998
(51) Int. Cl.: B62B 5/04

(54) **Von Hand bewegbarer Transportwagen**

(30) Priorität: 29.04.1997 DE 19718060
(71) Anmelder: Wanzl GmbH & Co. Entwicklungs-KG, D-89336 Leipheim (DE)
(72) Erfinder: Wanzl, Rudolf, 89340 Leipheim (DE)

(57) **Zusammenfassung**

Die Erfindung betrifft einen von Hand bewegbaren Transportwagen (1), der auf einem Fahrsteig (11) oder auf einer Rolltreppe (12) beförderbar ist und sich zum Transport von Gepäck oder Ware eignet, der zwei hintere Räder (10) und vorne wenigstens eine Lenkrolle (9) aufweist und mit einer Schiebeeinrichtung (7) ausgestattet ist, von der eine durch die Schiebeeinrichtung (7) beeinflußbare Bremseinrichtung (8) zu den hinteren Rädern (10) führt.

Es wird vorgeschlagen, die hinteren Räder (10) als Bremsräder auszubilden, die unabhängig von der Bremseinrichtung (8) dann automatisch gebremst sind, wenn sie sich auf dem begehbaren beweglichen Abschnitt (13) des Fahrsteiges (11) oder der Rolltreppe (12) befinden.

## Beschreibung

Die Erfindung betrifft einen von Hand bewegbaren Transportwagen, der auf einem Fahrsteig oder auf einer Rolltreppe beförderbar ist und sich zum Transport von Gepäck oder Ware eignet, der zwei hintere Räder und vorne wenigstens eine Lenkrolle aufweist und mit einer Schiebeeinrichtung ausgestattet ist, von der eine durch die Schiebeeinrichtung beeinflußbare Bremseinrichtung zu den hinteren Rädern führt.

Es wird vorgeschlagen, die hinteren Räder als Bremsräder auszubilden, die unabhängig von der Bremseinrichtung dann automatisch gebremst sind, wenn sie sich auf den, begehbaren beweglichen Abschnitt des Fahrsteiges oder der Rolltreppe befinden.

Diese Maßnahme erhöht die Sicherheit des Benützers eines Transportwagens dann, wenn der Transportwagen den Fahrsteig oder die Rolltreppe verlassen soll. Unabhängig davon ob die Bremseinrichtung wirksam ist oder nicht, schieben die automatisch gebremsten hinteren Räder, bedingt durch den laufenden Fahrsteig oder die laufende Fahrtreppe, den Transportwagen so weit über den am Ende des Fahrsteiges oder der Rolltreppe befindlichen Kamm, bis die hinteren Räder an diesem Kamm anstoßen. Dann müssen durch Schieben des Transportwagens nur noch die hinteren Räder über den Kamm bewegt werden. Dies ist gewöhnlich kein Problem.

Die Erfindung wird anhand eines Ausführungsbeispieles näher erläutert. Es zeigt
- Fig. 1: einen Transportwagen sowie
- Fig. 2: einen Teil eines Fahrsteiges mit darauf befindlichem Transportwagen.

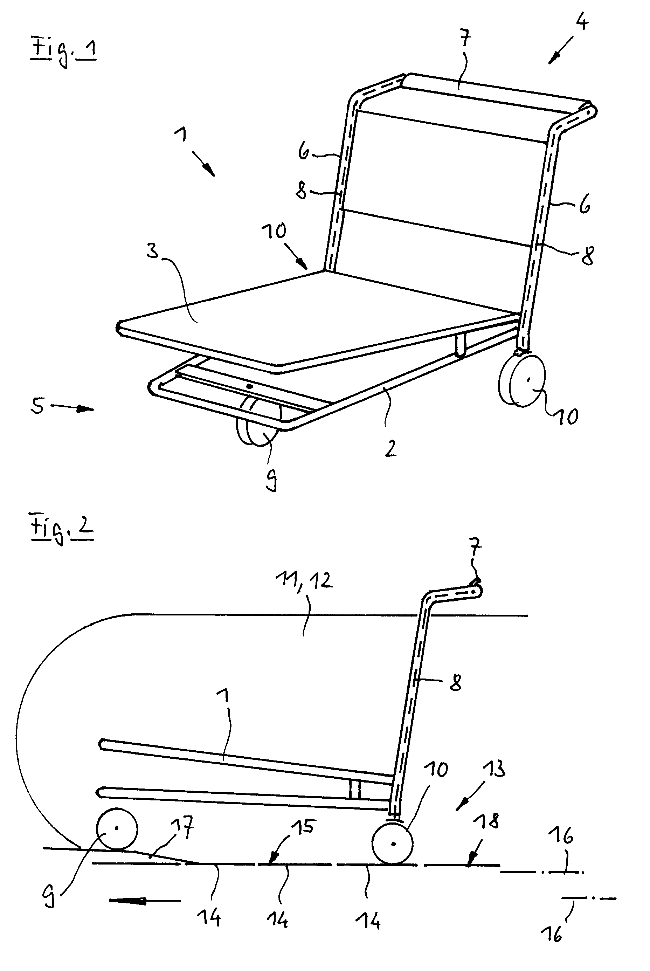

Der in Fig. 1 dargestellte Transportwagen 1 weist ein mit wenigstens einer Ladefläche 3 ausgestattetes Fahrgestell 2 auf. Der Transportwagen 1 eignet sich zur Aufnahme von Gepäck oder Ware oder für beides. Im hinteren Bereich 4 des Transportwagens 1 befinden sich beispielsweise nach oben gerichtete Stützen 6, die eine Schiebeeinrichtung 7 tragen. Im vorderen Bereich 5 weist das Fahrgestell 2 wenigstens eine mit einem gewöhnlichen Laufrad ausgestattete Lenkrolle 9 auf. Nahe der Schiebeeinrichtung 7 sind hintere Räder 10 angeordnet. Von der Schiebeeinrichtung 7 führt beidseitig eine Bremseinrichtung 8 zu den hinteren Rädern 10. Die Bremseinrichtung 8 steht in Wirkverbindung mit der Schiebeeinrichtung 7. Die Schiebeeinrichtung 7 ist in bekannter Weise lageveränderbar gestaltet, wobei sich durch jede Lageveränderung die auf die hinteren Räder 10 wirkende Bremskraft beeinflussen läßt. Gewöhnlich ist es so, daß bei losgelassener Schiebeeinrichtung 7 die hinteren Räder 10 gebremst sind und durch Verschwenken der Schiebeeinrichtung 7 um eine horizontale Achse die Bremswirkung vermindert oder aufgehoben ist. Zumindest die hinteren Räder 10 sind als Bremsräder ausgebildet, die unabhängig von der Bremseinrichtung 8 dann automatisch gebremst sind, wenn diese sich auf dem begehbaren beweglichen Abschnitt 13 des Fahrsteiges 11 oder der Rolltreppe 12 befinden, siehe auch Fig. 2. Die hinteren Räder 10 sind mit Ausnahme der fehlenden vertikalen Schwenkachse z.B. so ausgebildet, wie dies in der DE 26 56 322 C2 oder in der EP 0 373 398 B1 näher beschrieben ist. Auch andere bekannte Ausführungsformen sind möglich. Beim Fahrsteig 11 wird der begehbare und bewegliche Abschnitt 13 durch die Paletten 14 gebildet, die aneinandergereiht das Fahrsteigband 15 bilden, während bei einer Rolltreppe 12 der begehbare und bewegliche Abschnitt 13 durch die miteinander verbundenen Stufen 16 besteht. Die automatische Bremsung der hinteren, auch als 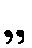 Fahrsteigräder" bezeichneten Räder 10 wird nur in Zusammenwirken mit den Nuten 18 und /oder den Stegen 18 der Paletten 14 des Fahrsteiges 11 oder der Stufen 16 der Rolltreppe 12 erzielt. Befindet sich der Transportwagen 1 außerhalb des Fahrsteiges 11 oder der Rolltreppe 12, ist diese Art der automatischen Bremsung der hinteren Räder 10 aufgehoben. Diese Wirkungsweise ist bekannt.

Fig. 2 zeigt ein Ende des Fahrsteiges 11. In der Zeichnung rechts angedeutet sind Stufen 16 eingezeichnet, die einer Rolltreppe 12 angehören können. Der Fahrsteig 11 oder die Rolltreppe 12 sind so gestaltet, wie dies z.B. in der DIN EN 115 näher beschrieben ist. Die Zeichnung zeigt ferner einen Transportwagen 1 nach Fig. 1. Die hinteren Räder 10 befinden sich noch auf den Paletten 14 des Fahrsteiges 11 oder alternativ auf den Stufen 16 der Rolltreppe 12. Die wenigstens eine Lenkrolle 9 hat schon den am Ende des Fahrsteiges 11 oder der Rolltreppe 12 befindlichen Kamm 17 überwunden. Die hinteren Räder 10 sind automatisch gebremst, so daß unabhängig davon, ob die Bremseinrichtung 8 wirksam ist oder nicht, der Transportwagen 1 vom laufenden Fahrsteigband 15 bzw. von den sich bewegenden Stufen 16 in Richtung zum Kamm 17 bewegt wird. Anschließend schlagen die hinteren Räder 10 am Kamm 17 an. Jetzt braucht nur noch die Bremswirkung der Bremseinrichtung 8 durch Bewegen der Schiebeeinrichtung 7 aufgehoben werden, um die hinteren Räder 10 über den Kamm 17 bewegen zu können. Es ist möglich, die wenigstens eine Lenkrolle 9 in gleicher Weise als automatisch bremsende Lenkrolle auszubilden. Ferner ist es möglich, die hinteren Räder 10 durch solche als 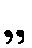 Fahrsteigrollen" bezeichnete Lenkrollen zu ersetzen. Schließlich ist es denkbar, die wenigstens eine vordere Lenkrolle 9 durch ein automatisch bremsendes Rad 10 der vorab beschriebenen Art und Weise zu ersetzen und dafür hinten zwei automatisch gebremste Lenkrollen (Fahrsteigrollen) vorzusehen.

## Patentansprüche

1. Von Hand bewegbarer Transportwagen, der auf einem Fahrsteig oder auf einer Rolltreppe beförderbar ist und sich zum Transport von Gepäck oder Ware eignet, der zwei hintere Räder und vorne wenigstens eine Lenkrolle aufweist und mit einer Schiebeeinrichtung ausgestattet ist, von der eine durch die Schiebeeinrichtung beeinflußbare Bremseinrichtung zu den hinteren Rädern führt, dadurch **gekennzeichnet,** daß die hinteren Räder (10) als Bremsräder ausgebildet sind, die unabhängig von der Bremseinrichtung (8) dann automatisch gebremst sind, wenn sie sich auf dem begehbaren beweglichen Abschnitt (13) des Fahrsteiges (11) oder der Rolltreppe (12) befinden.

2. Transportwagen nach Anspruch 1, dadurch **gekennzeichnet,** daß die hinteren Räder (10) durch Lenkrollen ersetzt sind, die automatisch bremsend in gleicher Weise wie die hinteren Räder (10) wirksam sind.

3. Transportwagen nach Anspruch 1, dadurch **gekennzeichnet,** daß die vordere Lenkrolle (9) durch eine Lenkrolle ersetzt ist, die automatisch bremsend in gleicher Weise wie die hinteren Räder (10) wirksam ist.
